# EUROPÄISCHE PATENTSCHRIFT

(11) **EP 3 457 983 B1**
(45) Veröffentlichungstag und Bekanntmachung des Hinweises auf die Patenterteilung: **15.07.2020**
(21) Anmeldenummer: 17727130.1
(22) Anmeldetag: 19.05.2017
(51) Int. Cl.: A61C 13/00

(54) **COMPUTERGESTÜTZTES HERSTELLUNGSVERFAHREN FÜR ZAHNERSATZTEIL ODER DENTALES HILFSELEMENT**
COMPUTER-ASSISTED MANUFACTURING METHOD FOR A TOOTH REPLACEMENT PART OR A DENTAL AUXILIARY ELEMENT
PROCÉDÉ DE FABRICATION ASSISTÉ PAR ORDINATEUR POUR PROTHÈSE DENTAIRE OU ÉLÉMENT AUXILIAIRE DENTAIRE

(30) Priorität: 20.05.2016 DE 102016208794
(43) Veröffentlichungstag der Anmeldung: 27.03.2019
(73) Patentinhaber: Sirona Dental Systems GmbH, 64625 Bensheim (DE)
(72) Erfinder: SCHÄFER, Andreas, 64668 Rimbach (DE)
(74) Vertreter: Özer, Alpdeniz
(86) Internationale Anmeldenummer: PCT/EP2017/062062
(87) Internationale Veröffentlichungsnummer: WO 2017/198803

(56) Entgegenhaltungen:
- DE-A1-102009 011 442
- US-A1- 2006 008 774
- US-A1- 2013 144 417

## Beschreibung

### Technisches Gebiet

Die Erfindung betrifft Verfahren zur computergestützten Herstellung eines Zahnersatzteils oder eines dentalen Hilfselements mittels einer Bearbeitungsmaschine.

### Stand der Technik

Zahnersatzteile oder dentale Hilfselemente wie beispielsweise Bohrschablonen oder Aligner werden üblicherweise mittels eines Werkzeugs einer Werkzeugmaschine aus einem Rohlingskörper herausgearbeitet. Hierzu wird der Rohling in die Werkzeugmaschine eingespannt und beispielsweise gemäß einem hinterlegten Modelldatensatz des herzustellenden Teils bearbeitet, so beispielsweise DE 10 2010 031 018.

US 2013/144417 A1 offenbart eine Methode zur Herstellung einer dentalen Bohrschablone, bei der ein virtuelles dreidimensionales Modell der Bohrschablone zur Anwendung kommt.

Weist das herzustellende Zahnersatzteil oder das herzustellende dentale Hilfselement einen mehrgliedrigen Aufbau auf, z.B. eine mehrgliedrige Brücke mit Zwischengliedern, wobei die einzelnen Glieder unterschiedliche, zueinander verkippte Einschubachsen oder Bohrachsen aufweisen, so kann das Zahnersatzteil bzw. das dentale Hilfselement mittels einer fünf Achsen bzw. Freiheitsgrade aufweisenden Werkzeugmaschine hergestellt werden, ohne den Rohling während der Bearbeitung umspannen zu müssen. Bei Verwendung einer nur vier Freiheitsgrade aufweisenden Werkzeugmaschine ist das Herstellen von zueinander windschief ausgerichteten Ausnehmungen meist nicht im Rahmen eines einzigen Bearbeitungsvorgangs möglich. Das herzustellende Bauteil wird dann beispielsweise aus mehreren einzeln hergestellten Bauteilen zusammengesetzt oder es ist möglich, den Herstellungsprozess zu unterbrechen und den Rohling in der Werkzeugmaschine bzw. der Rohlingsaufnahme der Werkzeugmaschine neu auszurichten.

Aufgabe der vorliegenden Erfindung ist es, die bekannten Herstellungsverfahren weiter zu bilden und ein Herstellungsverfahren bereitzustellen, welches eine besonders einfache und schnelle Herstellung von mehrgliedrigen Bauteilen mit zueinander verkippten Einschub- oder Bohrachsen auch mit einer Bearbeitungsmaschine mit nur vier Freiheitsgraden ermöglicht.

### Darstellung der Erfindung

Gegenstand der Erfindung ist ein Verfahren zur computergestützten Herstellung eines Zahnersatzteils oder eines dentalen Hilfselements mittels einer Bearbeitungsmaschine. Das Zahnersatzteil oder das dentale Hilfselement wird mittels eines Werkzeugs der Werkzeugmaschine aus einem Rohling herausgearbeitet, wobei der Rohling hierfür in der Bearbeitungsmaschine um eine senkrecht zu einer Vorschubachse des Werkzeugs verlaufende Rotationsachse drehbar eingespannt wird.

Ein dem Rohling entsprechender und die Rotationsachse umfassender dreidimensionaler Rohlingsdatensatz sowie ein dreidimensionaler Modelldatensatz des herzustellenden Zahnersatzteils oder des herzustellenden dentalen Hilfselements sind hinterlegt. Der Modelldatensatz weist einen ersten Bereich mit einer ersten Einschubachse und einen zweiten Bereich mit einer zweiten Einschubachse auf, wobei die erste Einschubachse und die zweite Einschubachse zueinander windschief ausgerichtet sind.

Der Modelldatensatz wird in mindestens zwei Positionierschritten in dem Rohlingsdatensatz angeordnet. In dem ersten Positionierschritt wird die erste Einschubachse des Modelldatensatzes senkrecht zu der Rotationsachse des Rohlingsdatensatzes ausgerichtet. In dem auf den ersten Positionierschritt folgenden, zweiten Positionierschritt wird durch eine Drehung des Modelldatensatzes um die erste Einschubachse die zweite Einschubachse des Modelldatensatzes senkrecht zu der Rotationsachse des Rohlingsdatensatzes ausgerichtet. Ein Ergebnis des Anordnens wird als Positionsdatensatz der Bearbeitungsmaschine bereitgestellt, wobei die Bearbeitungsmaschine das Zahnersatzteil oder das dentale Hilfselement gemäß dem Positionsdatensatz aus dem Rohling herausarbeitet.

Der dem Zahnfleisch zugewandte, also in Kontakt mit der Präparationsfläche stehende Teil eines Zahnersatzteils weist Ausnehmungen auf, die auch als Lumen bezeichnet werden. Ein mehrgliedriges Zahnersatzteil weist meist mehrere unterschiedlich ausgerichtete Ausnehmungen aus, wobei jede Ausnehmung eine jeweilige Einschubrichtung des Teilbereichs bestimmt. Entsprechend gibt eine bekannte Einschubachse die Richtung an, entlang der eine Ausnehmung hinterschnittfrei gefertigt werden kann.

Ein dentales Hilfsmittel ist beispielsweise eine Bohrschablone oder ein Aligner.

Eine Bohrschablone dient dazu die Richtung einer Bohrung zum Setzen eines Implantats vorzugeben, wofür die Bohrschablone einen entsprechend ausgerichteten Durchgangskanal aufweist. Eine mehrgliedrige Bohrschablone weist mehrere Durchgangskanäle auf, die zueinander windschief verlaufen können. Die durch den Durchgangskanal vorgegebene, auch als Bohrachse bezeichnete Bohrrichtung, also die Längsachse des Durchgangskanals, wird hier ebenfalls als Einschubachse bezeichnet.

Durch die jeweils senkrechte Ausrichtung von zwei zueinander windschief verlaufenden Einschubachsen zu der Rotationsachse des Rohlings bzw. der Rohlingsaufnahme der Bearbeitungsmaschine wird erreicht, dass beide Einschubachsen bzw. Bohrachsen gleichzeitig parallel zu der Vorschubachse des Werkzeugs verlaufen. So reichen vier Freiheitsgerade für eine hinterschnittfreie Herstellung der den beiden Einschubachsen folgenden Ausnehmungen des Zahnersatzteils bzw. Durchgangskanälen der Bohrschablone aus.

Vorteilhafterweise wird in einem auf den zweiten Positionierschritt folgenden dritten Positionierschritt der Modelldatensatz relativ zu dem Rohlingsdatensatz soweit innerhalb des Rohlingsdatensatzes verschoben und/oder um die Rotationsachse gedreht, dass der Modelldatensatz vollständig innerhalb des Rohlingsdatensatzes angeordnet ist. Der Modelldatensatz kann nach der Ausrichtung der Einschubachsen zu der Rotationsachse innerhalb des Rohlingsdatensatzes beliebig verschoben oder gedreht werden, soweit die Ausrichtung der Einschubachsen zu der Rotationsachse nicht verändert wird. Entsprechend könnte natürlich auch der Rohlingsdatensatz bei fixierter Position des Modelldatensatzes verschoben oder gedreht werden. Mittels einer beispielsweise parallelen oder senkrechten Verschiebung oder einer Drehung um die Rotationsachse kann somit sichergestellt werden, dass das Zahnersatzteil oder das dentale Hilfselement vollständig aus dem Rohling herausarbeitbar ist.

Vorteilhafterweise wird nach dem dritten Positionierschritt geprüft, ob der Modelldatensatz aus dem Rohlingsdatensatzes herausragt und bei Herausragen des Modelldatensatzes eine Fehlermeldung erzeugt, um fehlerhafte Herstellungsprozesse zu vermeiden.

Vorteilhafterweise wird für jeden Positionierschritt sichergestellt, dass der Modelldatensatz vollständig innerhalb des Rohlingsdatensatzes angeordnet ist. Eine Kontrolle der Position des Modelldatensatzes, also ob der Modelldatensatz vollständig innerhalb des Rohlingsdatensatzes liegt, kann auch nach jedem einzelnen Positionierschritt durchgeführt werden.

### Kurzbeschreibung der Zeichnungen

Ausführungsbeispiele der Erfindung sind in der Zeichnung dargestellt. Es zeigt die
- Fig. 1: einen Modelldatensatz eines mehrgliedrigen Zahner-satzteils mit zueinander windschiefen Einschubach-sen,
- Fig. 2: einen Rohlingsdatensatz,
- Fig. 3: eine schematische Darstellung der Verfahrens-schritte.

### Ausführungsbeispiele

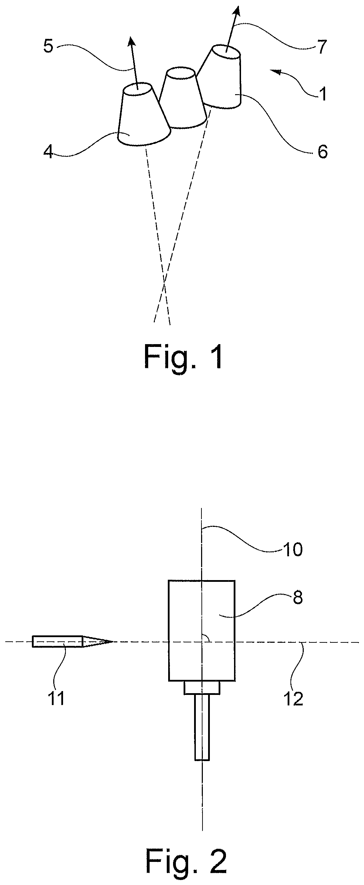

Die Fig. 1 zeigt schematisch einen Modelldatensatz 1 eines herzustellenden Zahnersatzteils. Der Modelldatensatz 1 weist einen ersten Bereich 4 mit einer ersten Einschubachse 5 und einen zweiten Bereich 6 mit einer zweiten Einschubachse 7 auf, wobei die erste Einschubachse 5 und die zweite Einschubachse 7 zueinander windschief verlaufen.

Modelldatensatz 1 könnte auch einem herzustellenden Aligner entsprechen. Ein Modelldatensatz 1 einer herzustellenden Bohrschablone (nicht dargestellt) würde eine erste entlang der ersten Einschubachse 5 verlaufende Durchgangsöffnung und eine zweite entlang der zweiten Einschubachse 7 verlaufende Durchgangsöffnung aufweisen.

Die folgenden Ausführungen hinsichtlich des Zahnersatzteils gelten entsprechend auch für ein dentales Hilfselement wie beispielsweise ein Aligner oder eine Bohrschablone.

In Fig. 2 ist ein Rohlingsdatensatz 8 eines für die Herstellung des Zahnersatzteils oder des dentalen Hilfsmittels zu verwendenden Rohlings mit einer Rotationsachse 10 dargestellt. Zur Veranschaulichung der Anordnung des Rohlings in der Werkzeugmaschine (nicht dargestellt) ist ein Werkzeug 11 mit einer senkrecht zu der Rotationsachse 10 verlaufenden Vorschubachse 12 neben dem Rohlingsdatensatz 8 skizziert.

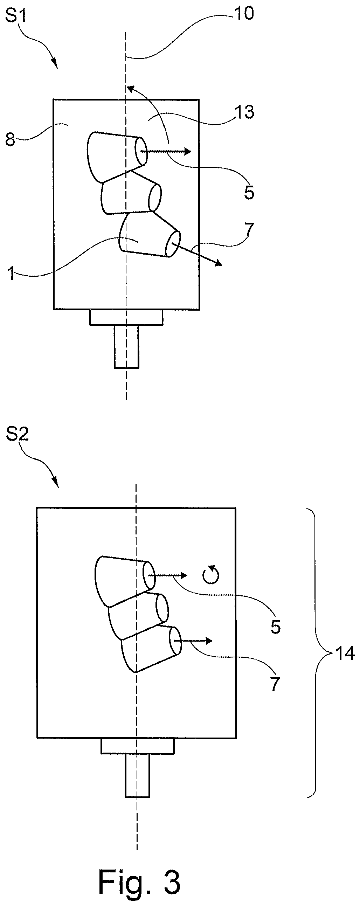

In Fig. 3 sind die beiden Positionierschritte schematisch dargestellt. Im ersten Positionierschritt wird der Modelldatensatz 1 innerhalb des Rohlingsdatensatzes 8 so angeordnet, dass die erste Einschubachse 5 in einem rechten Winkel 13 zu der Rotationsachse 10 ausgerichtet ist.

Im zweiten Positionierschritt wird der Modelldatensatz 1 soweit um die erste Einschubachse 5 gedreht, dass auch die zweite Einschubachse 7 senkrecht zu der Rotationsachse 10 ausgerichtet ist.

Das Ergebnis der beiden Positionierschritte wird als Positionsdatensatz 14 für die Herstellung des Zahnersatzteils oder des dentalen Hilfselements aus dem Rohling bereitgestellt.

## Patentansprüche

1. Verfahren zur computergestützten Herstellung eines Zahnersatzteils oder eines dentalen Hilfselements mittels einer Bearbeitungsmaschine,
- wobei das Zahnersatzteil oder das Hilfselement mittels mindestens eines Werkzeugs (11) der Bearbeitungsmaschine aus einem Rohling herausgearbeitet wird,
- wobei der Rohling in der Bearbeitungsmaschine um eine senkrecht zu einer Vorschubachse (12) des mindestens einen Werkzeugs verlaufenden Rotationsachse (10) drehbar eingespannt wird,
- wobei ein dem Rohling entsprechender und die Rotationsachse (10) umfassender dreidimensionaler Rohlingsdatensatz (8) hinterlegt ist,
- wobei ein dreidimensionaler Modelldatensatz (1) des herzustellenden Zahnersatzteils oder des herzustellenden dentalen Hilfselements hinterlegt ist,
- wobei der Modelldatensatz einen ersten Bereich (4) mit einer ersten Einschubachse (5) und einen zweiten Bereich (6) mit einer zweiten Einschubachse (7) aufweist,
- wobei die erste Einschubachse (5) und die zweite Einschubachse (7) zueinander windschief ausgerichtet sind,
- wobei der Modelldatensatz (1) in mindestens zwei Positionierschritten (S1, S2) in dem Rohlingsdatensatz (8) angeordnet wird und ein Ergebnis als Positionsdatensatz (14) der Bearbeitungsmaschine bereitgestellt wird,
- wobei die Bearbeitungsmaschine das Zahnersatzteil oder das dentale Hilfselement gemäß dem Positionsdatensatz (14) aus dem Rohling herausarbeitet,
**dadurch gekennzeichnet, dass**
- in dem ersten Positionierschritt (S1) die erste Einschubachse (5) des Modelldatensatzes (1) senkrecht zu der Rotationsachse (10) des Rohlingsdatensatzes (8) ausgerichtet wird,
- in dem auf den ersten Positionierschritt (S1) folgenden, zweiten Positionierschritt (S2) durch eine Drehung des Modelldatensatzes (1) um die erste Einschubachse (5) die zweite Einschubachse (7) des Modelldatensatzes (1) senkrecht zu der Rotationsachse (10) des Rohlingsdatensatzes (8) ausgerichtet wird.

2. Verfahren nach Anspruch 1, **dadurch gekennzeichnet, dass** in einem auf den zweiten Positionierschritt (S2) folgenden dritten Positionierschritt (S3) der Modelldatensatz (1) relativ zu dem Rohlingsdatensatz (10) soweit innerhalb des Rohlingsdatensatzes (8) verschoben und/oder um die Rotationsachse (10) gedreht wird, dass der Modelldatensatz (1) vollständig innerhalb des Rohlingsdatensatzes (10) angeordnet ist.

3. Verfahren nach Anspruch 2, **dadurch gekennzeichnet, dass** nach dem dritten Positionierschritt (S3) geprüft wird, ob der Modelldatensatz (1) aus dem Rohlingsdatensatzes (8) herausragt und bei Herausragen des Modelldatensatzes (1) eine Fehlermeldung erzeugt wird.

4. Verfahren nach Anspruch 1, **dadurch gekennzeichnet, dass** für jeden Positionierschritt (S1, S2) sichergestellt wird, dass der Modelldatensatz (1) vollständig innerhalb des Rohlingsdatensatzes (8) angeordnet ist.

## Claims

1. A method for the computer-assisted manufacture of a tooth replacement part or a dental auxiliary element by means of a machining tool,
- wherein the tooth replacement part or the auxiliary element is machined from a blank by means of at least one tool (11) of the machining tool,
- wherein the blank is clamped in the machining tool so as to be rotatable about an axis of rotation (10) which extends perpendicular to a feed axis (12) of the at least one tool,
- wherein a three-dimensional blank data set (8) corresponding to the blank and comprising the axis of rotation (10) is stored,
- wherein a three-dimensional model data set (1) of the tooth replacement part to be manufactured or of the dental auxiliary element to be manufactured is stored,
- wherein the model data set has a first region (4) having a first insertion axis (5) and a second region (6) having a second insertion axis (7),
- wherein the first insertion axis (5) and the second insertion axis (7) are oriented in a skewed manner with respect to one another,
- wherein the model data set (1) is arranged in the blank data set (8) in at least two positioning steps (S1, S2) and a result is made available to the machining tool as a position data set (14),
- wherein the machining tool machines the tooth replacement part or the dental auxiliary element from the blank according to the position data set (14),
**characterised in that**
- in the first positioning step (S1) the first insertion axis (5) of the model data set (1) is oriented perpendicular to the axis of rotation (10) of the blank data set (8),
- in the second positioning step (S2) following the first positioning step (S1) the second insertion axis (7) of the model data set (1) is oriented perpendicular to the axis of rotation (10) of the blank data set (8) by a rotation of the model data set (1) about the first insertion axis (5).

2. The method according to claim 1, **characterised in that** in a third positioning step (S3) following the second positioning step (S2) the model data set (1) is displaced relative to the blank data set (10) within the blank data set (8) and/or is rotated about the axis of rotation (10) so far that the model data set (1) is arranged completely within the blank data set (10).

3. The method according to claim 2, **characterised in that** after the third positioning step (S3) it is checked whether the model data set (1) protrudes from the blank data set (8) and, if the model data set (1) does protrude therefrom, an error message is generated.

4. The method according to claim 1, **characterised in that** for each positioning step (S1, S2) it is ensured that the model data set (1) is arranged completely within the blank data set (8).

## Revendications

1. Procédé de fabrication assisté par ordinateur d'un élément prothétique dentaire ou d'un élément auxiliaire dentaire au moyen d'une machine d'usinage,
- l'élément prothétique dentaire ou l'élément auxiliaire étant usinés au moyen d'au moins un outil (11) de la machine d'usinage, à partir d'une ébauche,
- l'ébauche, dans la machine d'usinage, étant serrée rotative autour d'un axe de rotation (10) perpendiculaire à un axe d'avance (12) de l'au moins un outil,
- un ensemble de données d'ébauche (8) tridimensionnelle, correspondant à l'ébauche et comportant l'axe de rotation (10), étant mémorisé,
- un ensemble de données de modèle (1) tridimensionnel de l'élément prothétique dentaire à fabriquer ou de l'élément auxiliaire dentaire à fabriquer étant mémorisé,
- l'ensemble de données de modèle comportant une première zone (4) dotée d'un premier axe d'introduction (5) et une seconde zone (6) dotée d'un second axe d'introduction (7),
- le premier axe d'introduction (5) et le second axe d'introduction (7) étant alignés avec un gauchissement l'un par rapport à l'autre,
- l'ensemble de données de modèle (1) étant disposé, en au moins deux étapes de positionnement (S1, S2), dans l'ensemble de données d'ébauche (8) et un résultat étant fourni à la machine d'usinage sous la forme d'un ensemble de données de position (14),
- la machine d'usinage usinant à partir de l'ébauche l'élément prothétique dentaire ou l'élément auxiliaire dentaire en fonction de l'ensemble de données de position (14),
**caractérisé en ce que**
- dans la première étape de positionnement (S1), le premier axe d'introduction (5) de l'ensemble de données de modèle (1) étant aligné perpendiculairement à l'axe de rotation (10) de l'ensemble de données d'ébauche (8),
- dans la deuxième étape de positionnement (S2), suivant la première étape de positionnement (S1), par rotation de l'ensemble de données de modèle (1) autour du premier axe d'introduction (5), le second axe d'introduction (7) de l'ensemble de données de modèle (1) étant aligné perpendiculairement à l'axe de rotation (10) de l'ensemble de données d'ébauche (8).

2. Procédé selon la revendication 1, **caractérisé en ce que** dans une troisième étape de positionnement (S3), suivant la deuxième étape de positionnement (S2), l'ensemble de données de modèle (1) est déplacé par rapport à l'ensemble de données d'ébauche (10) dans l'ensemble de données d'ébauche (8) et/ou est mis en rotation autour de l'axe de rotation (10) de sorte que l'ensemble de données de modèle (1) soit entièrement dans l'ensemble de données d'ébauche (10).

3. Procédé selon la revendication 2, **caractérisé en ce qu'**après la troisième étape de positionnement (S3), il est vérifié si l'ensemble de données de modèle (1) fait saillie de l'ensemble de données d'ébauche (8) et si tel est le cas (1), un message d'erreur est généré.

4. Procédé selon la revendication 1, **caractérisé en ce que**, pour chaque étape de positionnement (S1, S2), il est garanti que l'ensemble de données de modèle (1) est entièrement dans l'ensemble de données d'ébauche (8).
